# EUROPEAN PATENT APPLICATION

(11) **EP 0 786 625 A2**
(43) Date of publication of application: **30.07.1997**
(21) Application number: 97100953.5
(22) Date of filing: 22.01.1997
(51) Int. Cl.: F22B 31/04, F23G 5/46, F01K 3/24

(54) **Electric power generation system utilising waste burning heat**

(30) Priority: 26.01.1996 JP 11518/96
(71) Applicant: HITACHI, LTD., Chiyoda-ku, Tokyo 101 (JP)
(72) Inventor: Yamada, Akira, Hitachi-shi, Ibaraki 316 (JP); Kaji, Ryuichi, Tokyo 171 (JP); Tokunaga, Kenji, Tokyo 177 (JP); Ishigaki, Yukio, Hitachi-shi, Ibaraki 317 (JP); Koyama, Kazuhito, Hitachi-shi, Ibaraki 316 (JP); Okusawa, Tsutomu, Hitachi-shi, Ibaraki 316 (JP)
(74) Representative: Strehl Schübel-Hopf Groening & Partner

(57) **Abstract**

In a electric power generation system for generating steam by utilising heat from waste burning furnace (1) and introducing the steam into a steam turbine (3), a fuel reforming type burner (20) is provided and exhaust gas from the waste burning furnace is supplied as an oxidiser to it. NOₓ in the exhaust gas is reduced by H and CO generated from the fuel reforming type burner so as to become nitrogen gas and further dioxin is reduced too. Thereby clean gas is exhausted into the air. The exhaust gas from the fuel reforming type burner is utilised to increase the superheating degree of the steam so as to raise the electric power and improve the quality thereof.

## Description

### BACKGROUND OF THE INVENTION

The present invention relates to an electric power generation system utilizing waste burning heat for obtaining an electric power utilizing a heat generated during burning of waste (hereinafter referred to as garbage). More specifically, the invention relates to an electric power generation system which can remove harmful component such as NOX or dioxin contained in a waste burning exhaust gas (hereinafter referred to as exhaust gas).

Burning has been widely used as a method of garbage disposal for superiority in hygiene and volume reduction ratio. Also, for the purpose of cooling of the burning exhaust gas generated during garbage burning, various systems for collecting and utilizing the exhaust heat have been proposed and practiced.

Amongst, a plant for generation which generates vapor by the exhaust heat and drives a turbine by the vapor (which plant will be hereinafter referred to as garbage burning generation plant) has been practiced, conventionally as shown in Japanese Patent Laid-open No. 5-59905(1993).

In the above-identified publication, there is a disclosure that by a combination of an exhaust gas heat collecting vapor generator and an exhaust gas heat collecting device of a gas turbine, degree of superheating of vapor caused by the garbage burning exhaust heat is further increased. As one of the effect of the foregoing combination, total heat of the vapor to be introduced into the vapor turbine can be increased in comparison with the prior art to result in improvement of power generation efficiency. Namely, the disclosed invention is intended to increase power generation amount in which the vapor temperature could not be elevated sufficiently due to presence of corrosive components contained in the garbage burning exhaust gas, and a generated electric power is increased by supplying other fuel. However, by introduction of the gas turbine, a cost for fuel of the gas turbine becomes necessary and other costs for maintenance and repair should be incurred.

In an electric power generation system utilizing garbage burning heat, a processing of a dioxin and a nitrogen oxide contained in the garbage gas by the garbage burning is needed naturally. In this bulletin, relating to the garbage gas processing, a screening system is shown, however, any concrete contents is not shown.
In the electric power generation system using garbage burning heat, a processing method of garbage burning gas generally depends on a catalyst type denitration apparatus and is shown in Japanese Patent Laid-open No. 6-117276 (WPI 94-174302/21).

In the case the catalyst type denitration apparatus is provided, an exaust gas heating device should be provided. In other words, heavy metal and dust are contained in the garbage burning garbage gas, thereby the catalyst is poisoned, and is blinded.

On this account, it is neccessary to remove the heavy metal and dust beforehand by make them passing through a filter, it is neccessary to make temperature of the exaust gas lower to about 200°C so that said filter is not damaged by the heat of the exaust gas.
However, the catalyst doesn't function at such low temperature. Accordingly, it is neccessary to heat the exaust gas again before heating catalyst type denitration apparatus.

### SUMMARY OF THE INVENTION

An object of the present invention is in solving the above problem and providing a new electric power generation system in which the quantity of the electric power generation is increased without equiping any gas turbine, and the nitrogen oxide and the dioxin in the exaust gas are removed without installing the catalyst type denitration apparatus.

A characteristic feature of the present invention is in an electric power generation system in which exaust heat from a waste burning furnace is collected with a exaust heat collection boiler to generate steam and said steam is introduced into a steam turbine to generate electric power, characterized in that the exaust gas from said burning furnace introduced as an oxidizer into a combustion department of a fuel reforming type conbustor consisting of a fuel reforming department and said combustion department.

Said fuel reforming type conbustor make hydrocarbon fuel, air and water reacted in the fuel reforming department, thereby they are reformed into fuel gas which contains active hydrocarbon, carbon monoxide and hydrogen and are introduced into the combustion department, furthermore by adding an oxidizer to burn them, combustion gas with a high temperature is created.

As the carbon monoxide and the hydrogen are formed in the fuel reforming department, If the exaust gas from the waste burning furnace is introduced as the oxidizer in a case burning the reforming gas in the conbustion department, it is possible to reduce the nitrogen oxide by using the carbon monoxide and the hydrogen as reducing agent.

Furthermore, as the temperature of the combustion department reaches around 1200°C, the dioxin is broken down.

Temperature of the steam occurring in the exaust heat collection boiler is around 300°C to the utmost because of a limitation of a heat-resistant temperature of a furnace wall constitution materials of the boiler. Overheat degree of steam is raised by collecting and heating the exaust heat from the fuel reforming type conbustor.

Accordingly, the second characteristic feature of the present invention is in a electric power generation system in which steam is generated by collecting the exaust heat from the waste burning furnace with exaust heat collection boiler and said steam is introduced into a steam turbine to generate electric power, characterized in that the exaust gas from said burning furnace is introduced as an oxidizer into a combustion department of a fuel reforming type burner consisting of a fuel reforming department and said combustion department, and the steam generated in the waste heat collection boiler is overheated by collecting the waste heat from said fuel reforming type burner.

In the fuel reforming department of the fuel reforming type conbustor, a reaction between the hydrocarbon fuel, the water and the oxygen is taken place as stated above.

Thereby, the active hydrocarbon, carbon monoxide, carbon dioxide and hydrogen are formed.

As this reaction is promoted with temperature of 300°C or more, it is effective to provide water necessary for the reaction taken by the steam which occurred in a exaust heat recollection boiler.

Accordingly, the third characteristics of this invention is in that one part of the steam generated in the exaust heat recollection boiler is introduced into the fuel reforming department of the fuel reforming type conbustor.

In the electric power generation system utilyzing the waste burning heat, it is desirable to provide a closed system in which the steam occurred in the exaust heat recollection boiler is introduced into a steam turbine, and condensation of steam drained from said steam turbine is circulated to be returned in to the exaust heat recollection boiler again.

In this case, a high temperature neccessary for driving the steam turbine isn't provided only by the exaust heat recollection boiler, on the other hand, the exaust heat of the fuel reforming type conbustor reaches around 1200°C, therefore it is desirable that one part of condensation is evaporated by collecting exaust heat of fuel reforming type conbustorand this steam joins the steam from the exaust heat recollection boiler and is introduced into the steam turbine.

Here, as the temperature of the steam obtained by condensation is pretty lower than the temperature of the steam after overheating the steam of the exaust heat recollection boiler by utilizing the exaust heat of the fuel reforming type conbustor, it is desirable that the steam got by evaporating the condensation is joined with the steam from the exaust heat recollection boiler before collecting the exaust heat from the fuel reforming type conbustor, and the waste heat in the fuel reforming type burner is collected again.

Accordingly, the next characteristic of the present invention is in an electric power generation system in which the steam is generated by collecting the exaust heat from the waste burning furnace with the exaust heat recollection boiler, and said steam is introduced into the steam turbine and generate electricity, characterized in that, the exaust gas of the incinerator is introduced into the combustion department of the fuel reforming type conbustor consisting of the fuel reforming department and said combustion department as an oxidizer, the steam generated in the exaust heat recollection boiler is overheated by the recolleting the exaust heat of said fuel reforming type conbustor, one part of condensation of steam drained from the steam turbine evaporated by the exaust heat after overheating the steam of the exaust heat recollection boiler further, the steam obtained by evaporating the condensation is joined with the steam from the exaust heat recollection boiler before overheating the steam by collecting the exaust heat from the fuel reforming type conbustor.

It is desirable that hydrocarbon fuel and combustion air supplied in the fuel reforming type conbustor is heated by utilizing the exaust heat of said combustion device previously before supplying it in the fuel reforming type conbustor.

It is desirable too that a steam turbine is constituted with a high pressure turbine and a low pressure turbine, and the exhaust steam from the high pressure turbine is overheated again by utilizing the exaust heat of the fuel reforming type conbustor and is introduced into the low pressure turbine, thereby a quantity of electric power generation increases. In this case, it is desirable to overheat the exhaust steam from the high pressure turbine again after overheating the steam of the exaust heat recollection boiler with the exaust heat of the fuel reforming type conbustor and before heating one part of the condensation of the steam drained from the steam turbine.

In order to overheat the steam of exaust heat recollection boiler by collecting the exaust heat of the fuel reforming type conbustor, to evaporate one part of the condensation of the steam drained from the steam turbine, to overheate the exhaust steam from the high pressure turbine again, or to heat the hydrocarbon fuel and combustion air introduced into the fuel reforming type conbustor, it is desirable to provide a heat collection device, and to instal the machineryes described above inside thereof.

According to the present invention, as the fuel reforming type conbustor has a fuction as the denitration device, the catalyst type denitration apparatus is unnecessarily.

Further, as a high temperature of 1000°C or more is provided by the fuel reforming type conbustor, and it is possible to raise the steam temperature of the exaust heat recollection boiler by collecting this exaust heat, the gas turbine becomes unnecessarily.

However, driving of the steam turbine and the fuel reforming type conbustor may be stpped in stead.

In this case, the exaust gas from the waste burning furnace should be processed.

For such case, it is desirable to install the catalyst type denitration apparatus in the exaust heat collection device.

It is desirable to dispose the catalyst type denitration apparatus after the steam superheater for overheatinf the steam from the exaust heat recollection boiler and in front of a steam generating device for evaporating one part of the condensation of the steam drained from the steam turbine.

When a re-superheater of the exhaust steam of the high pressure steam turbine is provided in the exaust heat collection device, it is desirable to installthe catalyst type denitration apparatus thereafter.

Further, before introducing the exhaust steam of the high pressure turbine into the re-superheater, one part of the steam generated by the exaust heat recollection boiler is joined and is introduced into the heat catalyst type denitration apparatus after heating an incinerator exaust gas by the steam flowing through said re-superheater.

Furthermore, it is desirable to install a smoke cleaning device for the exaust gas drained from the exaust heat collection device and heating device to prevent white smoke from appearing from a chimney and to dispose it after the exaust heat collecting device.

In the electric power generation system of the present invention, it is very desirable to install a device for adjusting the oxygen density in the exaust gas on a way of a line which introduces the exaust gas of the incinerator into the fuel reforming type conbustor.

Because the quantity and an ingredient of the waste burnt in the incinerator furnace are not constant, the quantity and the temperature of exaust gas from the incinerator change, too.

On the other hand, in order to effectively use the exaust heat from the fuel reforming type conbustor, the quantity and the temperature of the exaust heat from fuel reforming type conbustor should not change.

So, the exaust heat from the fuel reforming type combustion device may be kept to be constant by adjust the oxygen density according to the quantity and the temperature of the exaust gas from then incinerator.

Accordingly, the present invention provides an incinerator exaust gas processing system having a purification facility of the exaust gas generated from the waste burning furnace, characterized in that, a fuel reforming type conbustor having the reforming department and the combustion department of the hydrocarbon fuel is provided as said purification facility and the incinerator exaust gas is supplied as an oxidizer of said combustion department in said fuel reforming type conbustor.

### BRIEF DESCRIPTION OF THE DRAWING

FIG. 1 is a system diagram showing one embodiment of the invention.

FIG. 2 is a view showing another embodiment of the invention.

FIG. 3 is a view showing the embodiment of preferred exhaust heat collecting device adapted to vapor amount fluctuation.

FIG. 4 is a view showing a system construction upon stopping of power generation system.

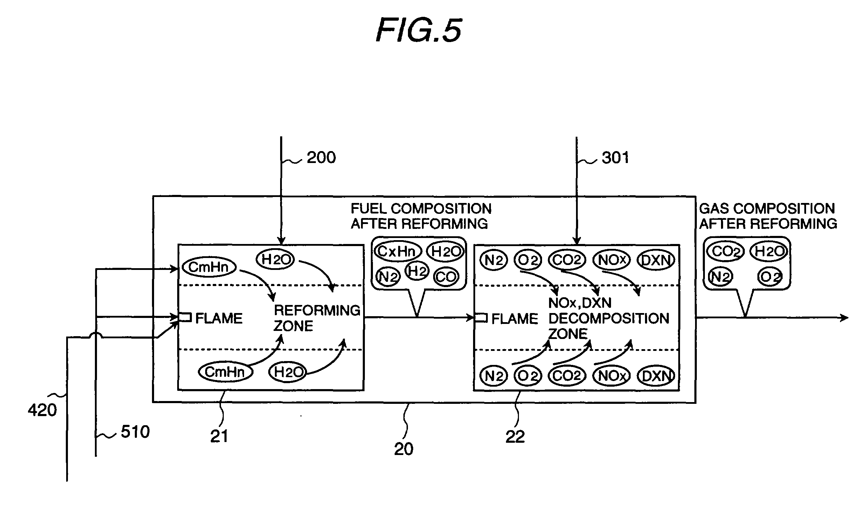

FIG. 5 is a view showing a construction a fuel reforming type burner.

The present invention will be discussed hereinafter in detail with reference to the drawings.

### DETAILED DESCRIPTION OF THE PREFERRED EMBODIMENT

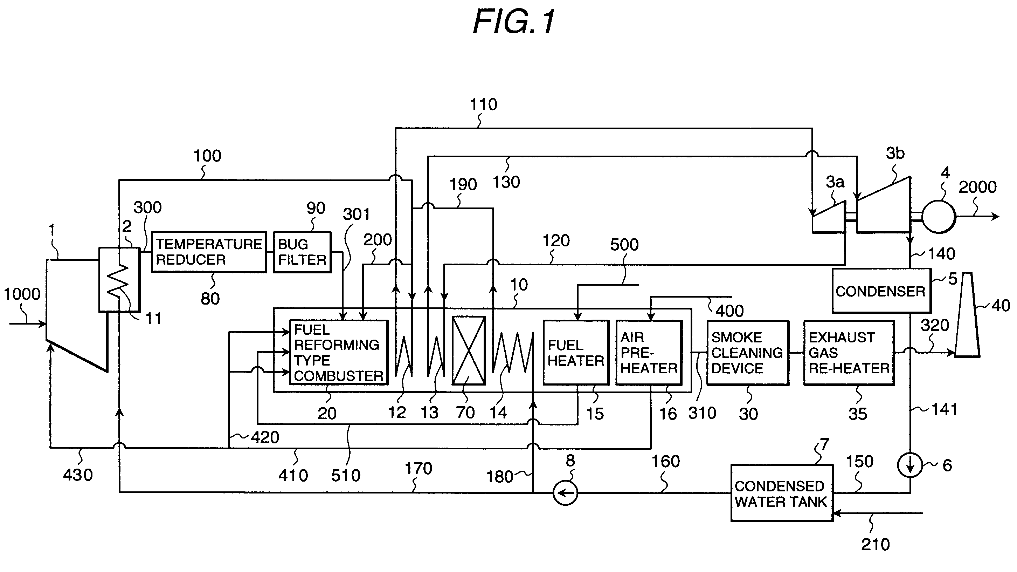

Fig. 1 is an illustration showing a construction and system of the garbage burning generation plant including basic device and equipments of the present invention.

The primary compositions are a waste incinerator 1, an exhaust heat collecting boiler 2 (while the present specification discloses the embodiment of an once-through boiler type, the type of the boiler type is not specifically limited but can be boiler of the drum type or so forth), a vapor turbine 3, a generator 4, a condenser 5, condenser pump 6, condensed water tank 7,water supply pump 8, a bug filter 90 provided in a burning exhaust gas system of the burning furnace, an exhaust heat collecting device 10, a smoke cleaner 30, an exhaust gas re-heater 35 and a chimney 40, vapor system 100 ∼ 140 and 190 ∼ 200, condensation system 141 ∼ 140, water supply system 170 ∼ 180, supply water system 210, exhaust gas and burning gas system 300 ∼ 320, air system 400 ∼ 430, fuel system 500 ∼ 510,garbage system 1000, power system 2000 and so forth.

Also, in the exhaust heat collecting device, there is provides a fuel reforming type combustor 20, a vapor superheater 12, a vapor re-superheater 13, a vapor generator 14 (while the present specification mainly discloses an once-through vapor generator, the type is not limited, and can be vapor generator of the drum type and so forth), a fuel heater 15, an air pre-heater 16 and a catalyst type denitration device 70.

Here, it is within the scope of the invention to place the fuel reforming combustor 20 outside of the exhaust head collecting device 10. It is therefore possible to connect both by a flue gas ducting to introduce the burning gas of the fuel reforming type combustor 20 to the exhaust heat collecting device 10 at the downstream side.

System and operating condition in the steady state will be discussed hereinafter.

The garbage is charged into the burning furnace 1 from a system 1000 (hereinafter referred to as system), and is burned with a pre-heated air from a system 430.

The burning exhaust gas generated associating with burning is introduced into the exhaust heat collecting boiler 2 to heat a water flowing within a heat transmission pipe 11 to generate a saturated vapor or superheated vapor. Then, the exhaust gas per se lowers the temperature to flow into a system 300.

In the system 300, a temperature reducer 80 is provided. The exhaust gas is lowered the temperature down to about 200 °C, and then introduced into the bug filter 90. The above-mentioned temperature, about 200 °C is the value mainly depending upon resistive temperature of a filter cloth disposed in the bug filter 90, and is determined in consideration of other temperature characteristics of removal performance.

In the bug filter 90, associating with reaction with slack lime, after removal of gas components, such as hydrogen chloride (HCl), sulfur oxides (SOₓ), heavy metal, dioxine and so forth, in the exhaust gas, the exhaust gas is introduced into the fuel reforming type combustor 20 from the system 301.

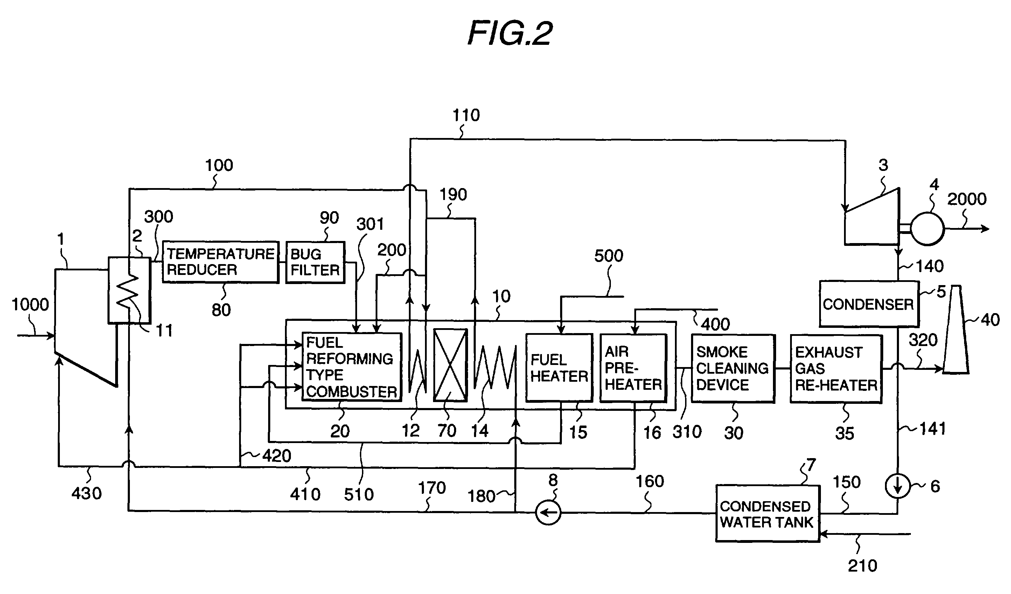

The fuel reforming type burner is constructed with a fuel reforming part and a burning part as shown in Fig. 2.

To the fuel reforming part of the fuel reforming combustor 20, the fuel in hydrocarbon series from a system 510, burning air from a system 420, and a vapor from a system 200 are supplied. A portion extracting the vapor from the system 200, is not limited to the portion shown in Fig. 1, and can be considered to be extracted from the system 100, a system 190 and a system 120.

The fuel of the system 510 is introduced from the system 500, and desirably heated by a fuel heater 15 to be introduced in gas state.

The burning air of the system 420 is introduced from a system 400 and preheated by the air pre-heater 16. It should be noted that the air is introduced into the garbage burning furnace 1 by the system 430 as set forth above and consumed as air for burning the garbage.

The air in the system 400 serves as one of aid for measure for odor by selectively drafting from odor generating portion of the garbage disposing facility.

The fuel reforming combustor 20 reformes the liquid fuel of the hydrocarbon series in the fuel reforming part 21 by the fuel, air and vapor from respective system set forth above, and after increased hydrogen component, a high temperature burning gas is provided in the burning part 22.

Here, a burning furnace exhaust gas 301 is supplied to the burning part as an oxidizor, and nitrogen oxide and dioxin in the exhaust gas are decomposed.

On the other hand, the vapor generated by the exhaust head collecting boiler 2 flows into a system 100, a partial amount flows to the fuel reforming combustor 20 from the system 200 as set forth above, and remaining vapor is introduced into the pipe of the vapor superheater 12 as first heat collecting device to be heated by high temperature burning gas outside of the pipe set forth above to elevate superheating degree.

In the pipe of the vapor superheater 12, the vapor generated in the vapor generator 12 as set out later is also introduced by a system 190. The vapor is also increased superheating degree.

With such operation, the vapor with improved amount and quality is introduced into a high pressure vapor turbine 3a by a system 110 to drive the turbine with expansion energy and flow into the vapor re-superheater 13 from the system 120.

The burning gas set forth above flows outside of the pipe of the vapor re-superheater 13, and the vapor from the system 120 flowing within the pipe is again heated to increase degree of superheating, and introduced into a low pressure vapor turbine 3b via a system 130 to drive the turbine to be a wet vapor or saturated vapor to be discharged from a system 140 and condensed by a condenser 5.

By driving of the high pressure turbine 3a and the low pressure turbine 3b as set forth above, the generator 4 is driven to generate a power to be transmitted to a commercial powering system in the plant through a system 2000.

The condensed water flows into a condensed water tank 7 by a condenser pump 6 and a system 150 via a system 141. Into the condensed water tank 7, water is supplied through a system 210 from outside of the system.

The condensed water flows through a deaearator (not shown) together with the supply water from a system 160 by a water supply pump 8, and then flows into a system 170 and a system 180 to be vapor again.

On the other hand, the exhaust gas lowered the temperature by the vapor re-superheater 13 passes through catalyst type denitration device 70 to flow into the vapor generator 14.

In the pipe of the vapor generator 14, water is introduced from a system 180 by the water supply pump 8 and heated by the exhaust gas outside of the pipe to generate the vapor. The vapor is introduced into the vapor superheater connected to the system 100 via the system 190 set forth above.

The exhaust gas further lowered the temperature by the vapor generator 14 flows into the fuel heater 15 and air pre-heater 16 to perform heating of the fuel and heating of the air respectively to lower the temperature, and discharged from the exhaust heat collecting device 10 by a system 310.

Providing the foregoing fuel heater 15 and the air pre-heater 16 separately at downstream of the exhaust heat collecting device 10 instead of disposing within the exhaust heat collecting device 10, is encompassed with the scope of the present invention.

The burning gas discharged into the system 310 flows into the exhaust gas re-heater 35 as the exhaust gas via the smoke cleaning device 30.

The smoke cleaning device 30 has an operation for removing hydrogen chloride component when it is contained in the exhaust gas, and lowers moisture content in the exhaust gas.

Furthermore, in the exhaust gas re-heater 35, with the vapor extracted from a vapor system (not shown) in the system, the exhaust gas is re-heated. Such operation is intended to prevent generation of white smoke upon discharging from the chimney.

The exhaust gas processed as set forth above flows into a system 320 and is discharged to ambient air through the chimney 40.

By the sequence of operation set forth above, in the steady operating condition, quite clean exhaust gas is discharged from the chimney, and the garbage burning heat can be quite effectively collected to perform power generation.

As set forth above, the heat generation amount of the garbage fluctuates depending upon kind, moisture amount or so forth, and thus burning heat amount is constantly varying. Therefore, a problem is encountered in that the vapor amount to be generated by collecting the exhaust gas heat also fluctuates. The present invention can solve the problem.

System and operation in fluctuation of the vapor amount will be discussed hereinafter. In the garbage burning furnace 1, an air amount from the system 430 is adjusted depending upon heat generation amount of the garbage 1000 so that garbage may be burnt completely. Accordingly, the vapor amount generated by the exhaust heat collecting boiler 2 fluctuates. As a result, the flow rate of the vapor flowing through the system 100 fluctuates.

The system according to the present invention can generate the vapor even by the vapor generator 14 placed within the exhaust heat collecting device in addition to the exhaust heat collecting boiler 2. Therefore, the fluctuating component of the vapor flow amount flowing through the system 100 is adjusted by the vapor flow rate of the system 190 combining with the system 100, to make the vapor flow rate in the vapor superheater 12 constant.

Adjustment of the vapor flow rate flowing through the system 190 is to control the vapor amount in the vapor generator 14. This control can be achieved by controlling the fuel amount of the system 510 and the air amount of the system 420.

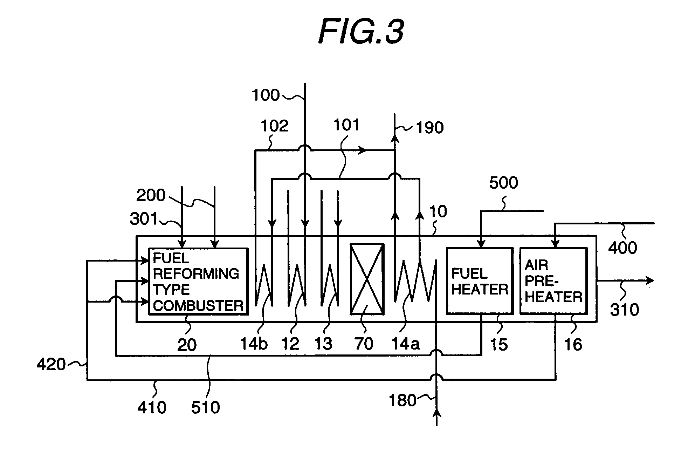

Fig. 3 is an illustration showing an arrangement of devices in the exhaust head collecting device 10 optimal for implementing the operation set forth above.

By dividing the vapor generator 14 into 14a and 14b, placing the vapor generator 14b is arranged upstream side of the vapor superheater 12 as viewed from the side of the burning gas flow. The intermediate position of the vapor generator 14a is branched by a system 101 to the vapor generator 14b. By this system, the following operation is performed.

When the vapor flow rate in the system 100 is small, operation is performed to increase the fuel amount of the system 510 and the air amount of the system 420 to increase the burning gas, and in conjunction therewith, to increase flow rate of the system 101.

By this operation, heat amount of the increased burning gas is collected by the vapor generator 14b to increase the vapor amount to flow into the system 102 and combined with the vapor generated in the vapor generator 14a. Thus, the vapor flow amount in the system 190 can be increased. By combining the vapor with the vapor in the system 100, the vapor flow amount of the vapor superheater 12 can be maintained constant.

In the shown system, the vapor amount fluctuating due to nature of garbage and so forth can be made constant with avoiding wasting of complicate control mechanism or discharging of the generated vapor out of the system, to introduce the vapor turbine. Therefore, it becomes possible to output a power with stable amount and frequency.

The present invention solves not only the problem in the steady operation state as set forth above, but also can discharge the exhaust gas in clean condition with removing the harmful component in the exhaust has even at stopping or resting of the power generation system. Thus without being troubled by presence or absence of generating operation, garbage burning disposal can be stably performed.

Hereinafter, discussion will be given for system and operation for removing nitrogen oxide in the exhaust gas upon stopping of the generation system, stopping of the fuel reforming type combustor, or in low load generation state.

Similarly to the steady operating condition set forth above, the vapor generated by garbage burning flows into the system 100. The exhaust gas os processed by the bug filter 90 and introduced into the fuel reforming type combustor 20 from the system 301.

Even while generation is stopping, it is necessary to remove the nitrogen oxide in the exhaust gas. In the shown system, the catalyst type denitration device 70 is provided in the exhaust heat collecting device 10.

The catalyst type denitration device 70 is a device to contact the exhaust gas to a material having catalyst function with adding reduction agent, such as ammonium or so forth to decompose the nitrogen oxide into nitrogen and water by reducing reaction.

The reducing reaction is optimal at a temperature 250 °C to 300 °C. The exhaust gas temperature introduced from the system 301 is at the temperature about 200 °C as set forth above. Therefore, temperature elevating means becomes necessary. As the temperature elevating means, the present invention provides the following method.

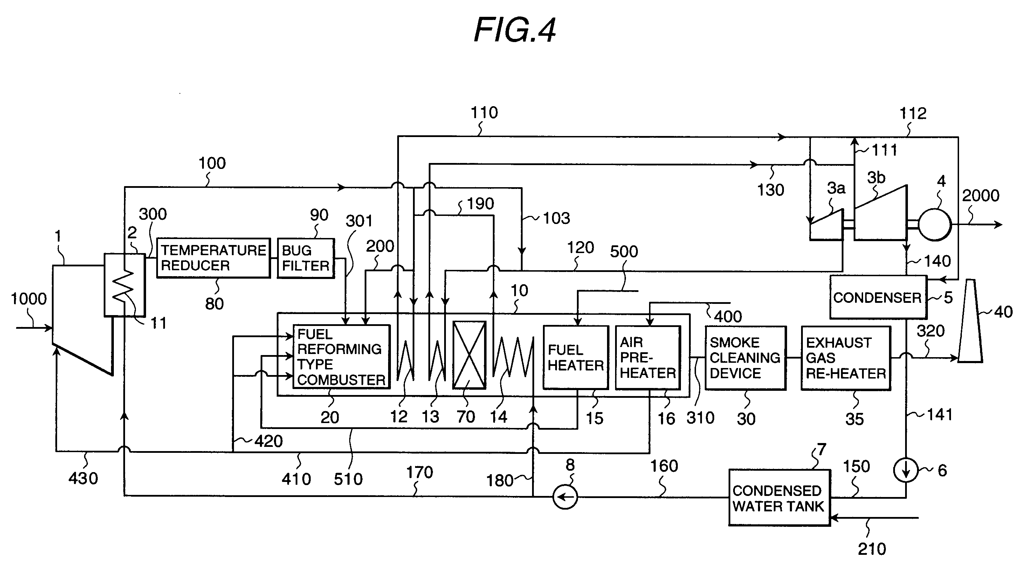

The first operation method will be discussed with reference to Fig. 4.

For no income by power trading, it would be desirable to use valuable fuel of the system 510. Therefore, in the present invention, the vapor superheater 12 and vapor re-superheater 13 used for superheating and re-superheating of the vapor are operated as heat exchanger to be used for heating the exhaust gas in the foregoing case.

Namely, the vapor generated by burning of garbage is introduced into the vapor superheater 12 from the system 100 and into the vapor re-superheater 13 through the system 103, to heat the exhaust gas out of the pipe to elevate the temperature thereof. The heat amount of the vapor per se is lowered to flow into the system 112 from the vapor superheater 12 via the system 110 and from the vapor re-superheater 13 via the systems 130 and 111, and introduced into the condenser to be condensed.

The exhaust gas elevated the temperature about 300 °C is added ammonium (not shown) and then introduced into the catalyst type denitration device, and then denitrated to be clean exhaust gas. Since the exhaust gas has low moisture content and high temperature, re-heating in the exhaust gas re-heater 35 can be neglected.

As set forth above, according to the first operation method. without using external valuable fuel, nitrogen oxide in the garbage burning exhaust gas can be effectively removed.

As the second method for elevating the low temperature exhaust gas up to about 300 °C, the exhaust gas by ancillary supplying the fuel and the air into the systems 510 and 420 is heated when the exhaust gas cannot be sufficiently elevated the temperature in the first operation set forth above.

Also, as the third operation method, in the case where power generation is performed while the power generation amount is small, such as only power to be consumed on the garage disposal plant is generated, in the system shown in Fig. 1, the exhaust is heated by supplying the fuel and air into the systems 510 and 420 so that the total heat of the vapor at the inlet of the high pressure vapor turbine becomes corresponding amount of the generation amount.

Namely, when the exhaust gas is heated with reducing the fuel, total heat of the vapor of the system 110 is reduced to lower the power generation amount, and when the exhaust has is heated by increasing the fuel, total heat of the vapor is increased to increase power generation amount.

As a conclusion, by controlling the fuel from the system 510 and the air from the system 420, under the condition where the garbage burning amount is constant, operation at arbitrary power generation amount can be enabled.

Fig. 2 shows another embodiment of the present invention.

The shown embodiment provides a preferred system in the case where a non-reheating system vapor turbine is provided.

The major components is removing the vapor re-superheater 13 in the exhaust heat collecting device 10 from the plant shown in Fig. 1, and accordingly, the systems 120 and 130 as input and output system of this device are also removed.

Accordingly, the basic operation and effect to be obtained by the operation are similar to those of Fig. 1. The feature of the shown embodiment is, while the power generation output is lower than that of the system of Fig. 1, the vapor turbine 3 can be simplified, and number of heat exchanger group in the exhaust heat collecting device 10 can be reduced so that facility construction cost can be reduced.

In the present invention as set forth above, high efficiency power generation with effectively collecting the garbage burning exhaust heat is obtained by providing the fuel reforming type burner in the burning furnace gas system.

Furthermore, the exhaust gas can be exhausted from the chimney as clean exhaust gas. Therefore, high environment protection effect can be achieved.

## Claims

1. An electric power generation system utilising waste burning heat in which exhaust heat from a waste burning furnace (1) is recollected by an exhaust heat recollection boiler (2) so as to generate steam, said steam being introduced into a steam turbine (3) to generate electric power,
**characterised** in that exhaust gas from said waste burning furnace (1) is introduced as an oxidiser into a combustion part of a fuel reforming type burner (20) which includes a fuel reforming part and said combustion part.

2. The system of claim 1, wherein said exhaust heat from said fuel reforming type burner (20) is collected so that said steam generated with said waste heat recollection boiler (2) is superheated.

3. The system of claim 1 or 2, wherein one part of said steam generated by said waste heat recollection boiler (2) is introduced into said fuel reforming part in said fuel reforming type burner (20).

4. The system of any preceding claim, wherein one part of the steam condensate drained from said steam turbine (3) is vaporised with the exhaust heat after having superheated said steam from said waste heat recollection boiler (2), and said steam formed by evaporating said condensate is joined with said steam from said waste heat recollection before said exhaust heat of said fuel reforming type burner (20) is collected and said steam is superheated.

5. The system of claim 4, wherein hydrocarbon fuel and combustion air supplied to said fuel reforming type burner (20) are heated with the exhaust heat of said fuel reforming type burner after having heated one part of said steam condensate drained from said steam turbine (3).

6. The system of claim 4 or 5, wherein said steam turbine (3) includes a high pressure turbine (3a) and a low pressure turbine (3b), exhaust steam of said high pressure turbine is superheated again with the exhaust heat after having superheated said steam from said waste heat recollection boiler (2) with the exhaust heat from the fuel reforming type burner (20) and before heating said one part of the steam condensate drained from said steam turbine (3), and said superheated steam is again introduced into said low pressure turbine (3b).

7. The system of any of claims 4 to 6, comprising
an exhaust heat collection device (10) for collecting said exhaust heat from said fuel reforming type burner (20),
a steam superheater (12) to increase the superheating degree of said steam generated with said waste heat recollection boiler (2) provided in said exhaust heat collection device, and
a steam generating device (14) for vaporising said one part of said steam condensate drained from said steam turbine (3).

8. The system of any of claims 4 to 6, comprising
an exhaust heat collection device (10) for collecting the exhaust heat from the fuel reforming type burner (20),
a re-superheater (13) for superheating said exhaust steam from said high pressure turbine, and
a steam generating device (14) for evaporating one part of said steam condensate drained from said steam turbine (3).

9. The system of claim 7 or 8, further comprising a heating device (15) operated with said hydrocarbon fuel supplied to the fuel reforming type burner (20) and another heating device (16) operated with the combustion air supplied to said fuel reforming type burner.

10. The system of claim 9, wherein said heating device operated (15) and said another heating device (16) are disposed downstream of said steam generating device (14) for generating said one part of said steam condensate drained from said steam turbine (3) in said exhaust heat collection device (10).

11. The system of claim 10, comprising a catalyst type de-nitration device (70) disposed upstream of a steam generation device (14) for evaporating one part of said steam condensate drained from said steam turbine (3) in said exhaust heat collection device (10), whereby the exhaust gas from the burning furnace is purified by said catalyst type de-nitration device while the operation of the steam turbine (3) and said fuel reforming type burner (20) is stopped.

12. The system of claim 11, wherein said exhaust steam joins with one part of said steam generated by said waste heat recollection boiler (2) before introducing said exhaust steam from the high pressure turbine (3a) into said re-superheater (13), and said exhaust gas from said waste burning furnace (1) is heated by said steam flowing through said re-superheater while the operation of the steam turbine (3) and said fuel reforming type burner (20) mentioned is stopped.

13. The system of any of claims 9 to 12, wherein a smoke cleaning device (30) for cleaning said exhaust gas drained from said exhaust heat collection device (10) and a heating device (35) for preventing white smoke are disposed downstream of said exhaust heat collection device (10).

14. The system of any preceding claim, comprising a device (90) for adjusting the oxygen density in said exhaust gas disposed in a line which introduces said exhaust gas from the waste burning furnace (1) into said fuel reforming type burner (20).

15. A burning furnace exhaust gas disposing system comprising a purification facility for exhaust gas generated from a waste burning furnace (1), **characterised** by a fuel reforming type burner (20) having a reforming part and a combustion part of hydrocarbon fuel as said purification facility, whereby said exhaust gas from the burning furnace (1) is supplied as an oxidiser to said combustion part in said fuel reforming type burner.
